Europäisches Patentamt

European Patent Office

Office européen des brevets

(11) Numéro de publication: **0 354 840**
**A1**

## (12) DEMANDE DE BREVET EUROPEEN

(21) Numéro de dépôt: **89402233.4**

(22) Date de dépôt: **08.08.89**

(51) Int. Cl.5: **B 25 G 1/10**
**B 25 G 3/18, A 01 B 1/22**

(30) Priorité: **09.08.88 FR 8810735**

(43) Date de publication de la demande:
**14.02.90  Bulletin  90/07**

(84) Etats contractants désignés: **BE ES GB IT LU**

(71) Demandeur: **3 D, Société anonyme**
**Les Bastides Blanches**
**F-04220 Sainte Tulle  (FR)**

(72) Inventeur: **Dumont, Alain**
**65 avenue Marcel Cachin**
**F-04220 Sainte Tulle  (FR)**

(74) Mandataire: **Doireau, Marc et al**
**OFFICE BLETRY 2, Boulevard de Strasbourg**
**F-75010 Paris  (FR)**

(54) **Outil de jardin à main comprenant un manche et divers outils montables de façon interchangeable sur ce manche.**

(57) - La liaison entre l'outil proprement dit et le manche est obtenue par un bouton-poussoir solidaire de l'un de ces deux composants de l'outil et susceptible de se bloquer dans un orifice co-opérant de dimensions correspondantes formé dans l'autre composant.

- L'outil proprement dit (A,B) et le manche (C) sont en une matière moulée, le bouton-poussoir (17) et l'orifice coopérant (11)) sont venus de moulage avec les composants respectifs (A,B et C) de l'outil, et ce bouton-poussoir (17) comprend, pour le relier à la paroi du composant de l'outil qui le comporte, un bord (6) qui est suffisamment aminci pour permettre l'enforcement puis le rappel en position soulevée du bouton-poussoir, lors de la liaison ou du désengagement des deux composants de l'outil.

FIG. 2

EP 0 354 840 A1

## Description

**Outil de jardin à main comprenant un manche et divers outils montables de façon interchangeable sur ce manche.**

La présente invention a pour objet un outil de jardin à main comprenant un manche et divers outils montables de façon interchangeable sur ce manche. Cet outil est du type dans lequel la liaison entre l'outil proprement dit pourvu d'un embout de montage et le manche est obtenue par un bouton-poussoir, qui est solidaire de l'un de ces deux composants de l'outil et qui est susceptible de se bloquer dans un orifice de dimensions correspondantes formé dans l'autre composant.

Le dispositif à bouton-poussoir habituel avec ressort a une structure relativement complexe. La présente invention a pour but une simplification du dispositif. A cet effet, elle a pour objet un outil de jardin à main du type susindiqué, mais caractérisé en ce que l'outil proprement dit et le manche sont en une matière moulée, en ce que ledit bouton-poussoir solidaire de l'embout de montage et ledit orifice co-opérant formé dans le manche sont venus de moulage avec les composants respectifs de l'outil, et en ce que ce bouton-poussoir comprend, pour le relier à la paroi au composant de l'outil qui le comporte, un bord qui est suffisamment aminci pour permettre, à la manière d'un ressort, l'enforcement puis le rappel en position soulevée du bouton-poussoir, au moment de la liaison ou du désengagement des deux composants de l'outil.

La réalisation de l'outil en matière moulée, métal tel que l'aluminium et ses alliages, ou préférablement plastique, permet d'avoir un bouton-poussoir qui est d'une pièce avec l'outil et qui ne comprend qu'un seul élément constitutif. La fabrication de l'outil s'en trouve simplifiée et les risques de détérioration du bouton-poussoir sont moindres.

L'emploi du plastique présente sur celui des métaux les avantages suivants : l'outil est plus léger, moins dangereux à l'emploi, il est non oxydable et plus facile à nettoyer et il peut être fabriqué en divers coloris qui le rendent esthétique, les plastiques pouvant être teintés dans la masse par ue addition de pigments ou de colorants.

Le procédé de moulage est avantageusement le moulage par injection.

Le manche de l'outil peut être, suivant la destination de ce dernier, court, long ou télescopique.

Des matières plastiques convenables pour la fabrication de l'outil proprement dit sont notamment les polycarbonates, les polyamides, les polypropylènes. Pour la partie active de l'outil, qui doit être très résistante, ces plastiques sont chargés aux fibres de verre, par exemple dans la proportion en poids 50/50. Pour l'embout de l'outil, la charge peut être moindre (10 à 15% en poids par exemple) et elle peut être sous forme de petites billes de verre, par exemple de 2/10 à 3/10 mm de diamètre; l'embout doit être moins dur à cause de la souplesse requise pour le bord flexible du bouton-poussoir, lorsque celui-ci est situé sur l'embout. Le manche de l'outil pourra être fabriqué en copolymère acrylonitrile-butadiène-styrène, dit ABS, de préférence de la qualité auto-extinguible, ou encore en polycarbonate, polypropylène ou polyamide, toutes ces matières plastiques n'ayant pas besoin d'être chargées dans le cas du manche.

Une forme particulière d'exécution de l'outil suivant l'invention est décrite ci-après à titre d'exemple purement indicatif et nullement limitatif, en référence au dessin annexé sur lequel :

la figure 1 est une vue en perspective de l'outil.

La figure 2 est une vue de dessus, éclatée et à échelle agrandie de l'outil.

La figure 3 est, à échelle encore agrandie, une vue en coupe de l'embout de l'outil proprement dit suivant la ligne III-III de la figure 2.

Les figures 4 et 5 sont des vues en coupe suivant les lignes IV-IV et V-V de la figure 3.

La figure 6 est, à échelle agrandie, une vue en coupe et éclatée du manche de l'outil suivant la ligne VI-VI de la figure 2.

Les figures 7, 8 et 9 sont des vues en coupe suivant les lignes VII-VII, VIII-VIII et IX-IX de la figure 6.

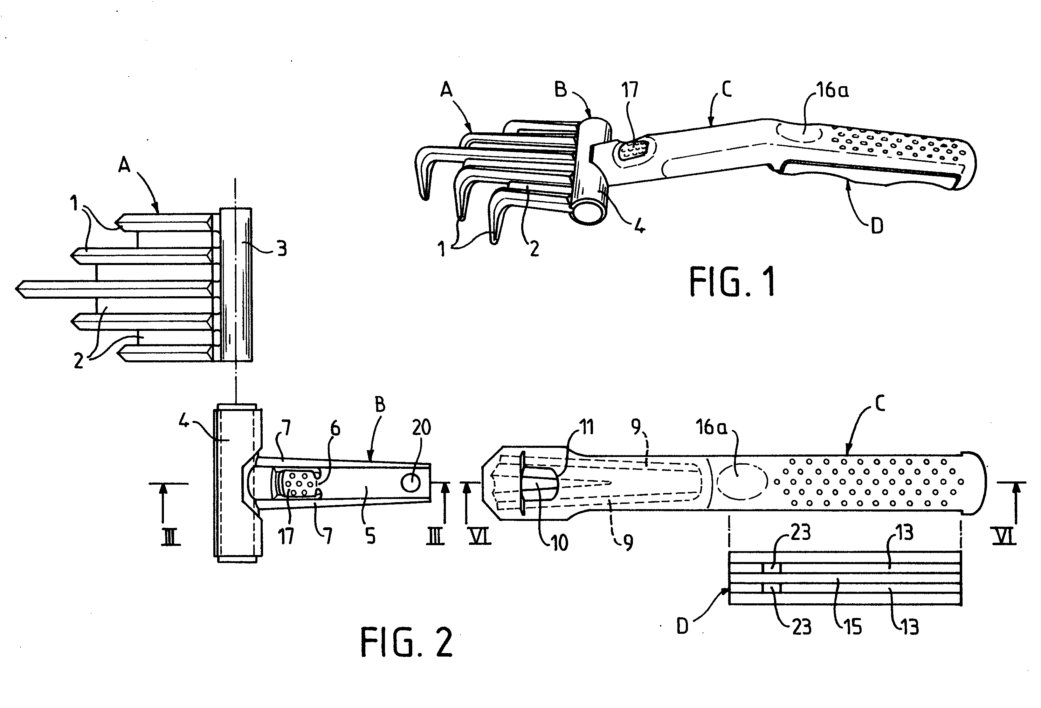

L'outil représenté (figures 1 et 2) est un petit râteau à manche court en matière plastique moulée, dont les éléments constitutifs sont la partie active A du râteau proprement dit, l'embout B de celui-ci, le manche C et la pièce D encastrable dans le manche.

La partie active A comprend des dents 1 qui sont réunies, entre elles, par une palmure rigide 2 et, à leur base, par une pièce cylindrique de lestage 3.

L'embout B comprend une partie cylindrique 4 et une partie tubulaire 5 disposée perpendiculairement à la partie 4 dans la région médiane de la paroi latérale du cylindre 4.

La partie active A est moulée isolément dans un premier moule et l'embout B est ensuite surmoulé sur la partie A dans un second moule, de façon que la partie cylindrique 4 de l'embout B enrobe la pièce cylindrique de lestage 3 de la partie active A. Pour mieux illustrer la structure de l'outil, l'embout B est représenté isolé sur le dessin. Le second moule est conçu de telle sorte que l'embout B surmoulé soit incliné d'un angle $\alpha$ sur le plan des dents 1. La pièce de lestage 3 peut être entourée d'un cylindre d'acier au moment du surmoulage de B sur A, ce cylindre étant fendu longitudinalement pour permettre son insertion sur les dents 1. La pièce 3 peut aussi être remplacée par une plaquette de liaison des dents 1 à leur base, plaquette sur laquelle on enfile un cylindre en acier fendu longitudinalement, avant le surmoulage de l'embout B sur la partie active A.

La pièce de lestage 3, comprenant ou non un cylindre en acier, est destinée à alourdir et à consolider l'outil proprement dit A,B. Un trou 20 à l'extrémité postérieure de la partie tubulaire 5 de l'embout B peut permettre de suspendre l'outil proprement dit lorsqu'il n'est pas utilisé.

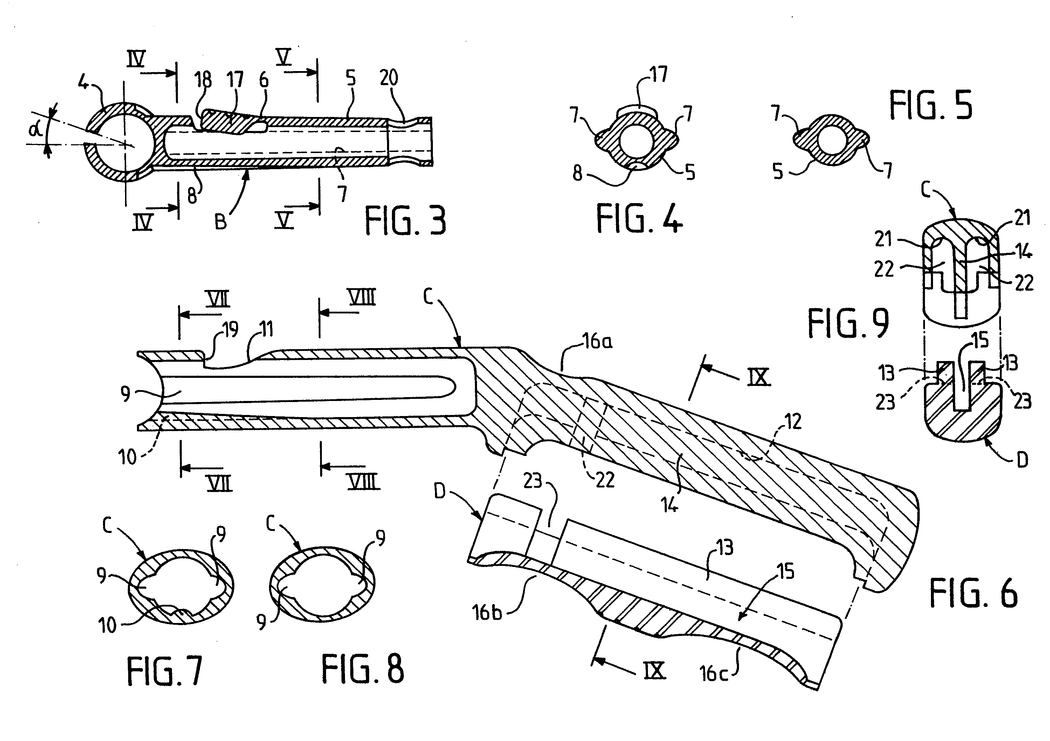

Sur l'embout B est venu de moulage le bouton-poussoir 17. Ce bouton-poussoir (figure 3) se présente comme une portion épaissie de la paroi supérieure de l'embout, détachée de cette paroi, sauf sur son bord arrière aminci 6, qui relie le bouton-poussoir à l'embout, le rappelle élastiquement en position soulevée sur l'embout et permet, par sa flexibilité, son enforcement dans l'embout.

La partie tubulaire 5 de l'embout B présente extérieurement (figure 4) des renflements latéraux 7 et une nervure inférieure 8. Le manche C, destiné à être enfilé sur l'embout, a une structure interne complémentaire de la structure externe de l'embout; il présente, par conséquent, des nervures internes latérales 9 et un renflement interne inférieur 10 (figure 7) correspondant aux renflements externes 7 et à la nervure externe 8 de l'embout. Ces renflements et nervures guident avec précision la mise en place du manche C sur l'embout B. L'extrémité antérieure du manche a, bien entendu, une structure exactement adaptée à celle de la région de la partie cylindrique 4 de l'embout B à laquelle elle se raccorde.

Dans la paroi supérieure du manche C et à proximité de l'extrémité antérieure de celui-ci est formée une ouverture 11 de forme et de dimensions adaptées à celles du bouton-poussoir 17. Lorsque le manche C est enfilé sur l'embout B, son extrémité antérieure enforce le bouton-poussoir 17 vers l'intérieur de l'embout, jusqu'à ce que ce bouton-poussoir saille et se bloque, en se redressant élastiquement, dans l'ouverture 11 du manche par butée de sa face antérieure 18 contre la face antérieure 19 de l'orifice 11, qui est situé sur le manche de façon que le bouton-poussoir y pénètre, lorsque l'extrémité antérieure du manche atteint la partie cylindrique 4 de l'embout.

L'extrémité de préhension du manche C présent un logement 12, dans lequel est encastrée une pièce D en élastomère souple, maintenue en place par tous moyens appropriés, par exemple une nervure longitudinale médiane 14 du manche s'insérant dans une rainure correspondante 15 de la pièce D et deux nervures 13 de cette pièce s'insérant dans des rainures 21 du manche. La pièce D peut aussi être collée dans son logement. Cette pièce en élastomère apporte un confort aux doigts de l'utilisateur. En outre, des zones concaves 16a,16b et 16c sont formées sur l'extrémité du manche et sous la pièce D pour le logement des doigts. Les zones concaves 16b et 16c n'etant pas identiques, des moyens sont prévus pour positionner la pièce D dans son logement 12 dans le bon sens. Ces moyens sont, dans les rainures 21 du logement 12, une cloison transversale 22 co-opérant avec deux rainures transversales 23 de la pièce D. La surface externe de l'extrémité de préhension du manche et celle du bouton-poussoir sont structurées pour empêcher le glissement des doigts. On peut dire de cet outil qu'il est ergonomique.

De plus, sa fabrication par moulage permet de lui donner une forme non seulement fonctionnelle, bien adaptée à son usage, mais en outre originale, esthétique, attrayante et elle permet aussi, lorsqu'il est en plastique, de le colorer d'une façon décorative, les teintes pouvant différer d'un élément à l'autre de l'outil pour lui donner un aspect contrasté.

Le changement de l'outil proprement dit s'obtient très facilement en appuyant sur le bouton-poussoir 17 et en tirant le manche C vers l'arrière, ce qui désengage celui-ci de l'embout B de l'outil proprement dit en service.

Des modifications de détail, du domaine des équivalents techniques, peuvent être apportées à l'outil décrit ci-dessus, sans que l'on sorte pour autant du domaine de l'invention. C'est ainsi que le bouton-poussoir 17 peut être rendu plus proéminent par insertion au moulage d'une pièce, par exemple en métal ou en plastique, qui sera saillante.

## Revendications

1.- Outil de jardin à main comprenant un manche et divers outils montables de façon interchangeable sur ce manche, la liaison entre l'outil proprement dit pourvu d'un embout de montage et le manche étant obtenue par un bouton-poussoir qui est susceptible de se bloquer dans un orifice coopérant de dimensions correspondantes, caractérisé en ce que l'outil proprement dit (A,B) et le manche (C) sont en une matière moulée, en ce que ledit bouton-poussoir (17) solidaire de l'embout (B) et ledit orifice coopérant (11) formé dans le manche (C) sont venus de moulage avec les composants respectifs (A,B et C) de l'outil, et en ce que le bouton-poussoir (17) comprend, pour le relier à la paroi de l'embout (B), un bord (6) qui est suffisamment aminci pour permettre, à la manière d'un ressort, l'enforcement puis le rappel en position soulevée du bouton-poussoir, au moment de la liaison ou du désengagement des deux composants de l'outil.

2. - Outil suivant la revendication 1, caractérisé en ce qu'il est en matière plastique moulée.

3. - Outil suivant la revendication 1 ou 2, caractérisé en ce que l'embout de montage (B) de l'outil proprement dit (A,B) et le manche (C) présentent des nervures rigides et des rainures complémentaires servant de guides au moment de la liaison ou du désengagement des deux composants de l'outil.

4 - Outil suivant l'une quelconque des revendications 1 à 3, caractérisé en ce que le manche (C) présente à son extrémité de préhension, sur ses faces externes supérieure et inférieure, des zones concaves (16a,16b,16c) pour le logement des doigts de l'utilisateur.

5 - Outil suivant l'une quelconque des revendications 1 à 4, caractérisé en ce que le manche (C) comprend, sous son extrémité de préhension, une pièce encastrée (D) en élastomère souple pour le confort des doigts de l'utilisateur.

6 - Outil suivant l'une quelconque des revendications 1 à 5, caractérisé en ce que la surface externe de l'extrémité de préhension du manche (C) et celle du bouton-poussoir (17) sont structurées pour favoriser l'adhérence des doigts de l'utilisateur.

FIG. 1

FIG. 2

EP 0 354 840 A1

FIG. 3

FIG. 4

FIG. 5

FIG. 6

FIG. 7

FIG. 8

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 078 358 (FA. CARL FREUDENBERG) * Figure 1; page 6, lignes 1-5,16-18 * | 1-3 | B 25 G 1/10 B 25 G 3/18 A 01 B 1/22 |
| Y | | 4-6 | |
| X | US-A-4 508 108 (MIYAOKA) * Figures 4,6; colonne 4, lignes 37-51 * | 1,2,4,6 | |
| X | | 3,5 | |
| X | FR-A-2 203 265 (ROMAN DIETSCHE KG) * Figure 1; page 3, lignes 19-23 * | 1,2 | |
| Y | | 3-6 | |
| Y | US-A-4 224 786 (LANGLIE et al.) * Figures 2,5-8 * | 3,6 | |
| A | | 1,2 | |
| Y | WO-A-8 503 898 (RIEMANN) * Figure 1 * | 4 | |
| Y | DE-A-2 344 987 (FA. GUSTAY WEBER) * Figure 1 * | 4 | DOMAINES TECHNIQUES RECHERCHES (Int. Cl.5) |
| Y | EP-A-0 208 942 (WERA-WERK HERMANN WERNER GmbH & CO.) * En entier * | 5 | A 01 B B 25 G |
| A | DE-A-3 234 704 (ROMAN DIETSCHE KG) * Figure 2 * | 1,2 | |

Le présent rapport a été établi pour toutes les revendications

| Lieu de la recherche | Date d'achèvement de la recherche | Examinateur |
|---|---|---|
| LA HAYE | 10-11-1989 | CARMICHAEL D.G. |